(19) Europäisches Patentamt
European Patent Office
Office européen des brevets

(11) **EP 4 778 421 A1**

(12) **EUROPEAN PATENT APPLICATION**

(43) Date of publication:
**22.07.2026 Bulletin 2026/30**

(21) Application number: **26152284.1**

(22) Date of filing: **16.01.2026**

(51) International Patent Classification (IPC):
**A44C 5/02** (2006.01) **A44C 5/08** (2006.01)
**A44C 11/00** (2006.01)

(52) Cooperative Patent Classification (CPC):
**A44C 5/022; A44C 5/08; A44C 11/007**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.01.2025 IN 202521003857**

(71) Applicants:
• **Capolavoro GmbH
82266 Inning am Ammersee (DE)**

• **KBS Creations
Mumbai 400096 (IN)**

(72) Inventors:
• **SHAH, Kunal
Andheri-East, Mumbai 400093 (IN)**
• **FRITSCH, Gerhard
82275 Emmering (DE)**

(74) Representative: **Wenzel Nemetzade Warthmüller
Patentanwälte Part mbB
Maximilianstraße 2
80539 München (DE)**

(54) **STRETCHABLE JEWELRY AND METHOD OF MANUFACTURING THE SAME**

(57) Stretchable jewelry 1 comprising plurality of sockets 2 configured to hold gemstones 6 and assemble to form tubular passage 11 for passing elastic wire 3 and allowing controlled sliding is disclosed. Closed ring of elastic wire 3 is formed by joining its two ends 5. Each socket 2 includes U-shaped hollow body 13, proximal and distal end walls 14, 18, projection 20 with through hole 22, and receptor hole 16. Pins 12 are inserted to restrict disassembly while allowing relative sliding of sockets 2 in assembled condition. One of the sockets 2 accommodates screws 4 that are LASER welded from central opening 27. Fixing of gemstone 6 in sockets 2 in assembled condition completely conceals elastic wire 3, screws 4 joining ends 5, LASER weld joint 8 and pins 12 from all sides in normal and fully stretched state exhibiting symmetrical aesthetics maintaining structural integrity, and allowing disassembly for repair.

FIG. 3

EP 4 778 421 A1

**Description**

**3. PREAMBLE TO THE DESCRIPTION**

The following specification particularly describes the invention and the manner in which it is to be performed.

**4. DESCRIPTION**

**FIELD OF THE INVENTION**

The present invention relates to a stretchable jewelry such as ring, bracelet, anklet, and necklace or of other similar type. The stretchable jewelry is featuring adaptation to different size as per wearer requirements without compromising on; its strength and aesthetics, ease of its wearing and comfort of wearer.

**BACKGROUND OF THE INVENTION**

A tennis bracelet is a type of flexible, elegant bracelet characterized by a single row of small, uniformly sized gemstones mostly diamonds fitted in a delicate metal chain, typically made-up of precious metals such as gold or platinum. Its design is known for its simplicity, symmetry, and sparkle, making it a popular choice for both everyday use and special occasions.

Based on the construction, various types such as; jewelry of fix size and shape, jewelry of adjustable size, flexible jewelry of fix size, flexible jewelry of adjustable size and flexible stretchable jewelry are known and disclosed in the prior art.

Aesthetic design of the jewelry is compromised by the clasp provided in the jewelry by operating (i.e. opening and closing) which, the jewelry can be worn or removed. This clasp not only creates an unsightly break in the jewelry's seamless appearance but also adds to production costs and is prone to breakage or damage. Additionally, it can be difficult for a wearer to fasten or unfasten the clasp alone, making it inconvenient to put on and take off jewelry independently.

To overcome these problems, expandable jewelries are introduced to allow the wearer to put on and put off the jewelry by simply enlarging it. Basically, such type of jewelries uses some mechanism including elastic element.

Expandable or stretchable jewelry, such as bracelets or necklaces, has been extensively covered in prior art, but existing designs often fall short in aesthetics, comfort, and functionality. A recurring issue is the visibility of elastic components or assembly mechanisms, which detracts from the elegance of the jewelry when displayed or worn.

For instance, EP4074210B1 describes a jewelry link assembly where elastic elements and locking pins remain visible in both normal and expanded conditions, compromising its aesthetic appeal. Similarly, IT102017000015156A and IT102018000004703A disclose fixed and expandable designs that expose structural components like elastic members or connectors, affecting the jewelry's elegance and comfort.

Patent applications US20160345690A1 and US20220079303A1 describes extensible bracelets with visible elastic elements and intricate mechanisms that impact visual appeal and increase manufacturing complexity. US20230189945A1 and US10271619B1 introduce flexible designs but fail to conceal elastic components, leading to aesthetic compromises. Additionally, WO2018172933A1, WO2019073275A1, and WO2024194809A1 highlight challenges like exposed mechanisms, discomfort from gaps or projections, and limited adaptability.

Efforts to conceal elastic components are observed in patents such as EP2712513B1, US20230371660A1, and US11116292B2, where elastic elements are hidden within link structures. However, these designs often feature visible connectors or assembly slots, which detract from the elegance when displayed. Moreover, discomfort arises from exposed pins or gaps that interact with the wearer's skin, leading to irritation or entrapment of skin and hair.

Patent No. US11116292B2 describes a jewelry item with an elastic element running through its length and slidable ornamental elements connected non-releasably. While functional, the design has drawbacks: the elastic element is visible through side slots, exposed inserts on the bottom surface compromise aesthetics and comfort, and stick-slip behavior affects smooth sliding of the elements.

To overcome these limitations, the disclosed invention proposes jewelry articles where elastic elements and connectors are entirely concealed. This design ensures an uninterrupted, elegant appearance, enhances wearer comfort by eliminating exposed mechanisms, and simplifies the assembly process without compromising aesthetics or functionality.

**OBJECTS OF THE INVENTION**

The principal object of the present invention is to overcome the drawbacks of the prior art by providing a stretchable jewelry in which all components of mechanism, including an elastic element that provides stretchability, remains concealed in normal as well as in stretched conditions, whether it is worn by the user or is displayed, due to its design and construction.

Another object of the present invention is to provide a stretchable jewelry that is of seamless construction and without any cavity or hole or slot or joint on exterior visible surfaces including jewelry surfaces facing and in contact with the skin of the wearer minimizing discomfort to the wearer.

An additional object of the present invention is to provide a stretchable jewelry that adapt to different size as per user requirement without the need for clasps or fasteners making them more comfortable to wear, easier to put on and remove, and less fragile.

An additional object of the present invention is to provide a stretchable jewelry that is of adequate strength required for regular use without deforming, offering long lasting jewelry.

An additional object of the present invention is to provide a stretchable jewelry that is with fever number of components, easy to manufacture, smother in operating and easy to maintain.

An additional object of the present invention is to provide a stretchable jewelry in which basic elements remains in assembled condition in event of breakage of an elastic element eliminating risk of losing of the said jewelry.

An additional object of the present invention is to provide a stretchable jewelry that maintains its geometric symmetry in normal as well as in partially stretched conditions.

A further object of the present invention is to provide a stretchable jewelry with a design and construction that can be easily adapted to different jewelry type such as ring, bracelet, anklet, and necklace or of other similar type.

## SUMMARY OF THE INVENTION

This invention relates to a stretchable jewelry design, incorporating a unique structure for enhanced flexibility, aesthetics, and user comfort. The jewelry comprises multiple interconnected sockets that create a tubular passage to house an elastic wire, such as a circular cylindrical helical spring. This elastic wire provides support and stretchability to the jewelry, while the connected sockets allow controlled sliding movement, enabling the jewelry to expand and contract.

The stretchable jewelry comprises of; a plurality of sockets adapted to assembled with each other forming a tubular passage and allowing controlled relative sliding movement of the sockets in an assembled condition, an elastic wire passing through the tubular passage for supporting the plurality of sockets, screws assembled with two ends of the elastics wire for joining the ends to form a ring shape, a pin inserted into each socket for restricting sliding movement and preventing disassembling of one socket with respect to other socket.

Each socket is designed with a U-shaped hollow body closed on both ends and features a lateral projection. The lateral projection provided with a cylindrical bore enables assembly of one socket with an adjacent socket by fitting into a corresponding receptor hole provided in the adjacent socket. The pin mechanism restricts lateral sliding movement between sockets, ensuring the jewelry retains its shape while stretching for wearing and in wore condition.

The elastic wire runs through the U-shaped hollow space and the cylindrical bore of the sockets and is looped by joining heads of the screws by laser welding to form a closed elastic loop. The screws along with the ends of the elastic wire are concealed within the U-shaped hollow body of one of the socket. Material of the elastic wire, such as Nitinol or Titanium, and characteristics of the circular cylindrical helical spring formed by the elastic wire are tailored to provide a specific stiffness to the elastic wire for comfort and resilience.

The top of each socket is designed with claws and a through vertical hole for securely holding gemstones and inserting the pins for assembling and restricting relative sliding movement of the sockets respectively wherein fitting the gemstone hide the internal construction or structure of the socket adding elegance.

When the jewelry is stretched, the adjacent sockets move slightly apart, exposing the lateral projections, while the pins securely hold the sockets together to prevent disassembly. This provides a symmetric, aesthetic look even when expanded. The jewelry can be disassembled for repair or maintenance by removing the gemstones, cutting the weld joint of the screws and removing the pins. Materials for the sockets and pins may vary, ranging from precious metals, non-precious metals to durable non-metallic materials like ceramics or resin, depending on desired strength, cost, and appearance. Material of the socket and pin may be same or different.

This innovative design offers both functionality and aesthetics, providing a stretchable jewelry that is comfortable, easy to wear, durable and visually appealing, with concealed structural elements in all conditions (i.e. either in display or worn by the wearer).

## BRIEF DESCRIPTION OF THE DRAWINGS

Further features and advantages of the present invention will be more apparent from the description of a preferred but not exclusive embodiment of the stretchable jewelry, illustrated by way of non-limiting example with the aid of the accompanying drawings, wherein:

**FIG. 1** is a perspective view of the stretchable jewelry according to the present invention in normal condition.

**FIG. 2** is a perspective view of the stretchable jewelry according to the present invention in stretched condition.

**FIG. 3** is a perspective view of the socket according to the present invention.

**FIG. 4** is a front view of the socket according to the present invention.

**FIG. 5** is a top view of the socket according to the present invention.

**FIG. 6** is a right hand side view of the socket according to the present invention.

**FIG. 7** is a left end side view of the socket according to the present invention.

**FIG. 8** is a cross-section view of the socket along plane AA shown in **FIG. 5** according to the present invention.

**FIG. 9 (a)** is a perspective view of the elastic wire and (b) elastic wire dimensions according to the present invention.

**FIG. 10** is an exploded view of the assembly of the plurality of sockets according to the present invention.

**FIG. 11** is a perspective view of the assembly of the plurality of sockets according to the present invention in (a) normal condition and (b) in stretched condition.

**FIG. 12** is a top view of the assembly of the plurality of sockets according to the present invention in (a) normal condition and (b) in stretched condition.

**FIG. 13** is a cross-section view of the assembly of the plurality of sockets along a vertical plane passing through the centre line of the stretchable jewelry according to the present invention in (a) normal condition, (b) in stretched condition and (c) enlarge view in stretched condition.

**FIG. 14** is a cross-section view of the assembly of the sockets along with the socket concealing screws joining two ends of the elastic wire.

**FIG. 15** is a perspective view of the assembly of the sockets along with the elastic wire showing inner side face of the stretchable jewelry according to the present invention.

**FIG. 16** shows exploded views of the assembly of the socket concealing the screws joining two ends of the elastic wire with the adjacent socket according to the present invention.

**FIG. 17** shows joining of two ends of the elastic wire using screws and LASER welding.

**FIG. 18** is a top view of the assembly of the socket accommodating two ends of the elastic wire along with the screws and the LASER weld with the sockets on its either side according to the present invention.

**FIG. 19** is a pictorial view showing stretchable jewelry along with dimensions as per example 1 according to the present invention in (a) normal condition and (b) in stretched condition.

**List of designations/ reference numbers in figure**

| | |
|---|---|
| 1. | a stretchable jewelry |
| **2.** | a socket **2** |
| **2a.** | an adjacent socket **2** on a proximal end wall **14** side of the socket **2** |
| **2b.** | an adjacent socket **2** on a distal end wall **18** side of the socket **2** |
| **3.** | an elastic wire |
| **4.** | a screw |
| **5.** | an end of the elastic wire **3** |
| **6.** | a gemstones |
| **7.** | a length of the socket **2** |
| **8.** | LASER weld joint |
| **9.** | a hollow space within the socket **2** |
| **11.** | a tubular passage formed by assembling the plurality of sockets **2** |
| **12.** | a pin |
| **12a.** | a pin inserted into a through vertical hole **29b** of the adjacent socket **2a** |
| **12b.** | a pin inserted into a through vertical hole **29b** of the adjacent socket **2b** |
| **13.** | a U-shaped hollow body of the socket **2** |
| **13a.** | U-shaped hollow body of the socket **2a** |
| **13b.** | U-shaped hollow body of the socket **2b** |
| **14.** | a proximal end wall closing the U-shaped hollow body **13** |
| **14a.** | a proximal end wall closing the U-shaped hollow body **13a** |
| **14b.** | a proximal end wall closing the U-shaped hollow body **13b** |
| **15.** | a proximal end of the U-shaped hollow body **13** |
| **16.** | a receptor hole is provided on the proximal end wall **14** |
| **16a.** | a receptor hole of the adjacent socket **2a** |
| **16b.** | a receptor hole of the adjacent socket **2b** |
| **17.** | an axis of the socket **2** |

**EP 4 778 421 A1**

| | | |
|---|---|---|
| 18. | a distal end wall closing the U-shaped hollow body **13** | |
| 18a. | a distal end wall of the adjacent socket **2a** | |
| 18b. | a distal end wall of the adjacent socket **2b** | |
| 19. | a distal end of the U-shaped hollow body **13** | |
| 19a. | a distal end of the U-shaped hollow body **13a** | |
| 19b. | a distal end of the U-shaped hollow body **13b** | |
| 20. | a projection extending from the distal end wall **19** | |
| 20a. | a projection of the adjacent socket **2a** | |
| 20b. | a projection of the adjacent socket **2b** | |
| 21. | an outward lateral direction along the axis **17** | |
| 22. | a through hole | |
| 23. | a horizontal flat plane provided on an outer cylindrical surface **24** | |
| 24. | an outer cylindrical surface of the projection **20** | |
| 25. | a blind slot provided on the horizontal flat plane **23** | |
| 25a. | a blind slot of the adjacent socket **2a** | |
| 25b. | a blind slot of the adjacent socket **2b** | |
| 26. | a top wall partially closing the U-shaped hollow body **13** from the top | |
| 27. | a central opening | |
| 28. | a plurality of claws | |
| 29. | a through vertical hole | |
| 29a. | a through vertical hole of the adjacent socket **2a** | |
| 29b. | a through vertical hole of the adjacent socket **2b** | |
| 30. | a length of a pin **12** | |
| 31. | an end of the pin **12** | |
| 32. | a surface of the receptor hole **16** | |
| 33. | other end 33 of the pin **12** | |
| 34. | an internal bottom surface of the blind slot **25** | |
| 34a. | an internal bottom surface of the blind slot **25a** | |
| 34b. | an internal bottom surface of the blind slot **25b** | |
| 35. | a partial length of the projection **20** defining a length of the blind slot **25** | |
| 36. | a diameter of the through hole **22** of the projection **20** | |
| 37. | a bottom external surface of the U-shaped hollow body **13** of the plurality of sockets **2** | |
| 38. | a dimension defining size $D_1$ of the stretchable jewelry **1** in normal condition | |
| 39. | a dimension defining size $D_2$ of the stretchable jewelry **1** in stretched condition | |
| d | wire diameter | |
| D | spring outer diameter | |
| $D_o$ | a diameter of head of the screws **4** | |
| $D_1$ | a size of the stretchable jewelry **1** in normal condition | |
| $D_2$ | a size of the stretchable jewelry **1** in stretched condition | |
| P | a pitch | |
| N | total number of sockets **2** assembled to construct stretchable jewelry **1** | |

## DETAILED DESCRIPTION OF THE INVENTION

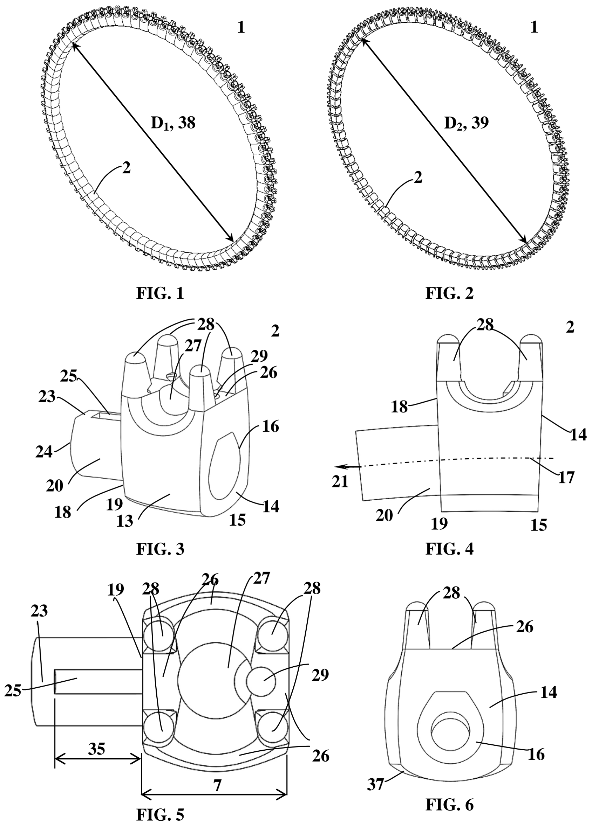

Referring to the **FIGS. 1** to **19** used for describing present invention, reference numeral **1** denotes a stretchable jewelry. In the example illustrated in **FIGS. 1** to **2,** the stretchable jewelry **1** is depicted as a bracelet. However, other possible embodiments may include ring, anklet, necklace or of other similar type of jewelry that are flexible to adapt to the different size in a defined range. Specifically, the stretchable jewelry **1** illustrated in **FIGS. 1** to **2** is an expandable bracelet that can be worn by simply stretching by enlarging its size. **FIG. 1** and **FIG. 2** show the stretchable jewelry **1** according to the present invention in normal and in stretched condition respectively.

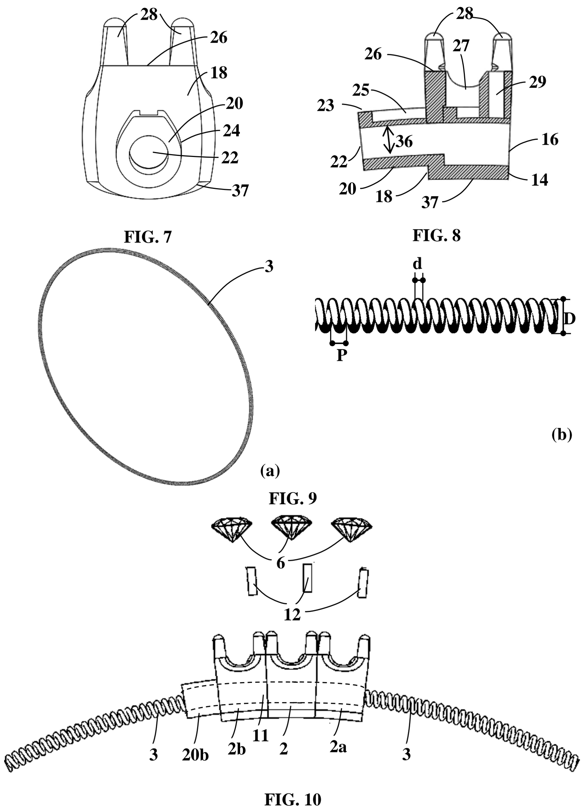

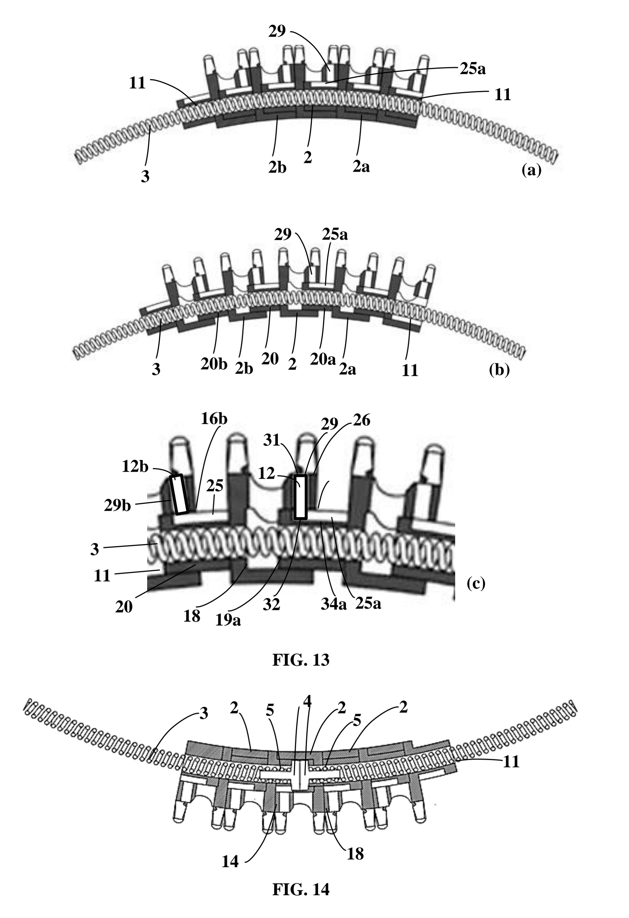

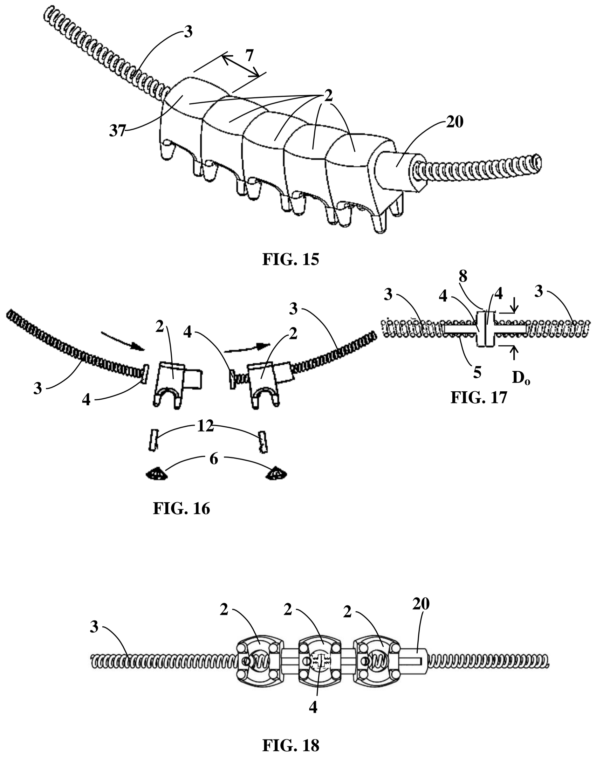

For the purpose, as shown in **FIG. 10,** the stretchable jewelry **1** comprises a plurality of sockets **2** for fitting of gemstones **6** and configured to assemble with each other allowing controlled sliding movement of one socket **2** with respect to other in an assembled condition concealing all parts of mechanism used for providing extensibility to the stretchable jewelry **1**. As shown in **FIG. 10,** an elastic wire **3** is passed through a tubular passage **11** formed by assembling the plurality of sockets **2** for supporting the plurality of sockets **2** in all (i.e. in normal as well as stretched) states. As shown in **FIG. 17,** two ends **5** of the elastic wire **3** are joined and held together to form a closed ring shape using screws **4.** One of the sockets **2** conceal the screws **4** along with the ends **5** of the elastic wire **3** within its hollow space **9** for aesthetic of the stretchable jewelry **1** and comfort of the wearer as shown in **FIG. 14.**

As shown in **FIG. 10,** a pin **12** is inserted into each socket **2** for restricting sliding movement of the adjacent socket **2** and preventing disassembling of the sockets **2** with respect to other in event of breakage of the elastic wire **3.** The screws **4** are made up of the metallic material preferably stainless steel that can be LASER welded. The elastic wire **3** is made up of Nitinol or Titanium or other metals having equivalent mechanical properties and the screws **4** are firmly attached to the ends **5** of the elastic wire **3** by mechanical fastening or joining by brazing as shown in **FIG. 17.** The screws **4** have heads with diameters $D_o$ smaller than the diameter of the through hole **22** of the projection **20.**

Detail construction of the socket **2** is described using **FIGS. 3** to **8.** As shown in **FIG. 3** and **4,** each said socket **2** comprises a U-shaped hollow body **13,** a proximal end wall **14** closing the U-shaped hollow body **13** from its proximal end **15,** a distal end wall **18** closing the U-shaped hollow body **13** from its distal end **19** and positioned parallel to the proximal end wall **14,** a projection **20** extending from the distal end wall **19** in an outward lateral direction **21** along an axis **17** of the socket **2.** As shown in **FIG. 8,** the projection **20** along with the distal end wall **18** is provided with a through hole **22** for passing the elastic wire **3.** As shown in **FIG. 3** and **5,** the projection **20** is provided with a horizontal flat plane **23** on its outer cylindrical surface **24** for preventing relative rotation of the socket **2** with respect to each other in assembled condition and a blind slot **25** on the horizontal flat plane **23** starting from the distal end wall **19** and extending up to partial length **35** of the projection **20** parallel to the axis **17** of the socket **2.** As shown in **FIG. 3** and **6,** a receptor hole **16** is provided on the proximal end wall **14** along the axis **17** of the socket **2** with shape of the receptor hole **16** corresponds to an outer cross-section profile of the projection **20.** As shown in **FIGS. 3** to **8,** a top wall **26** is provided for partially closing the U-shaped hollow body **13** from the top. As shown in **FIG. 3, 5** and **8,** the top wall **26** is configured for accommodating and fixing of the gemstone 6 using a central opening **27** and a plurality of claws **28** extended upwardly from the U-shaped hollow body **13.** The top wall **26** is configured such that fixing of the gemstone **6** using the plurality of claws **28** to the socket **2** completely hide the internal hollow construction of the socket **22** including a through vertical hole **29,** the pin **12** and the elastic wire **3** as can be observed from **FIG. 18.** The through vertical hole **29** is provided on the proximal end wall **14** starting from the top wall **26** and extending up to the receptor hole **16** as shown in **FIG. 3, 5** and **8.** The through hole **22** provided in the projection **20** and the receptor hole **16** are coaxial as can be observed in **FIG. 8.**

**FIGS. 10** to **13** shows assembly of one of the socket **2** with its adjacent sockets 2a and 2b on its proximal end wall **14** and the distal end wall **18** side respectively. As shown in **FIG. 13(a-c),** after assembling the socket **2** with the adjacent socket **2a** by inserting the projection **20a** of the adjacent socket **2a** into the receptor hole **16** of the socket **2,** the blind slot **25a** of the adjacent socket **2a** aligns with the through vertical hole **29.** The pin **12** is inserted into the through hole **29** from the top wall **26** of the socket **2.** As shown in **FIG. 13(c),** the pin **12** is having a length **30** such that one end **31** of the pin **12** is projected out of a surface **32** of the receptor hole **16** of the socket **2** and remains within the blind slot **25a** of the projection **20a** of the adjacent socket **2a** without touching internal bottom surface **34a** of the blind slot **25a** whereas other end **33** of the pin **12** remaining in a horizontal plane containing the top wall **26** and brazed to the top wall **26** of the socket **2.** Further, inner dimensions of the receptor hole **16** of the socket **2** and outer dimensions of the projection **20a** of the adjacent socket **2a** are kept such that it forms clearance fit for allowing easy sliding of the projection **20a** of the socket **2a** in the receptor hole **16** of the socket **2** in an assembled condition. A length of the projection **20a** of the adjacent socket **2a** extending from the distal end **19a** of the U-shaped hollow body **13a** gemstone 6is configured such that it doesn't touches the distal end wall **18** closing the U-shaped hollow body **13** of the socket **2** in any state in assembled condition. In normal state, dimension of the stretchable jewelry **1** is minimum and in fully stretched condition, dimension of the stretchable jewelry **1** is maximum.

Similarly, as shown in **FIG. 13(c),** the socket **2** is assembled with the adjacent socket **2b** on the side opposite to the socket **2a** by inserting the projection **20** of the socket **2** into the receptor hole **16b** of the adjacent socket **2b** and inserting the pin **12b** into the through vertical hole **29b** of the adjacent socket **2b** to engage with the blind slot **25** of the socket **2.** Further, inner dimensions of the receptor hole **16b** of the socket **2b** and outer dimensions of the projection **20** of the adjacent socket **2** are kept such that it forms clearance fit for allowing easy sliding of the projection **20** of the socket **2** in the receptor hole **16b** of the socket **2b** an assembled condition. A length of the projection **20** extending from the distal end **19** of the U-shaped hollow body **13** is configured such that it doesn't touches the distal end wall **18b** of the adjacent socket **2b** in any state in assembled condition.

The elastic wire **3** as shown in **FIG. 9(a-b)** is made up of Nitinol or Titanium material formed in shape of the circular cylindrical helical spring. Dimensions of the elastic wire **3** such as wire diameter **d,** spring outer diameter **D** and a pitch **P** are maintained to get the stiffness of the elastic wire that balances comfort and functionality. The ideal stiffness depends on factors such as the type of jewelry (e.g., bracelets or necklaces or other), the material of the elastic wire **3,** the material weight, and the required stretch range. The stiffness of elastic wire **3** for optimal user experience shall be decided based on testing and analysis of the elastic wire with different stiffness. For example, optimal stiffness for the bracelet ensures that it stretches comfortably around the wrist while maintaining enough tension to fit snugly without slipping off. The stiffness should allow the bracelet to stretch easily for wearing without excessive force while securely returning to its original shape.

As shown in **FIG. 16,** a diameter **Do** of the screw **4** connecting two ends **5** of the elastic wire **3** is kept smaller than a diameter of the through hole **22** of the projection **20** for inserting and accommodating the screws **4** into the socket **2.**

Upon stretching, circumference of closed ring shape formed by the elastic wire **3** increases because of its elastic deformation. This results into radial expansion of a closed ring shape formed by the elastic wire **3** increasing its size. Upon release of stretching force, the elastic wire **3** regains its original circular ring shape.

After assembling total **N-1** number of sockets **2** as discussed above, the elastic wire **3** is passed through a tubular passage **11** formed by the sockets **2** in assembled conditions. As shown in **FIG. 14, 16** and **17,** two ends **5** of the elastic wire **3** coming out of the sockets **2** located at two ends of a series formed by assembling total **N-1** number of sockets **2** are joined and held together to form a closed ring shape using the screws **4**. The screws **4** attached to the ends **5** of the elastic wire **3** are accommodated within an internal hollow space of the U-shaped hollow body **13** of the socket **2** used for joining of the sockets **2** located at two ends of a series formed by assembling total **N-1** number of sockets **2** and LASER welded to form the close ring shape of the elastic wire **3** within the hollow space for concealing the screws **4** for aesthetic of the stretchable jewelry **1** and comfort of the wearer. **N** represents total number of sockets **2** assembled to construct stretchable jewelry **1** of required size in normal and in fully stretched states.

**FIG. 16** shows exploded views of the assembly of the socket **2** accommodating the two ends **5** of the elastic wire **3** along with the screws **4** with the socket **2** on its distal end wall **18** side according to the present invention. **FIG. 17** shows joining of two ends **5** of the elastic wire **3** using screws **4** and LASER welding joint **8. FIG. 14** shows a cross-section view of the socket **2** accommodating the two ends **5** of the elastic wire **3** along with the screws **4** with the sockets **2** on its either side along plane. **FIG. 15** is a perspective view showing an inner portion of the partial number of the sockets **2** assembled together along with the elastic wire **3** including the socket accommodating two ends **5** of the elastic wire **3** along with the screws **4.**

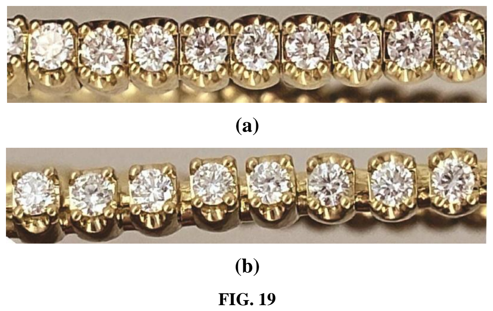

The screws **4** attached to the ends **5** of the elastic wire **3** and accommodated within the internal hollow space of the U-shaped hollow body **13** of the socket **2** is LASER welded using the central opening **27** provided in the top wall **26.** After LASER welding, the gemstone **6** is fitted using the plurality of claws **28** and central opening **27** provided in the top wall **26** of the socket **2.** Fitting of the gemstones 6 to all the socket **2** results into complete concealing of the pins **12** used for assembling the sockets **2** with each other, the elastic wire **3** assembled within the tubular passage **11,** the ends **5** of the elastic wire **3** and the screws **4** along with LASER weld joining the ends **5** within the U-shaped hollow body **13** of the sockets **2** without compromising the aesthetics of the stretchable jewelry **1** when displayed or worn by the wearer and, comfort of the wearer. **FIG. 18** shows top view of the assembly of the sockets **2** including the socket **2** containing the ends **5** of the elastic wire **3** and the screws **4** along with LASER weld joint **8. FIG. 19** shows a pictorial view of the stretchable jewelry **1** along with dimensions as per example 1 according to the present invention in (a) normal condition and (b) in stretched condition.

The sockets **2a** and **2b** are sockets adjacent to the socket **2**. The sockets **2, 2a** and **2b** are identical.

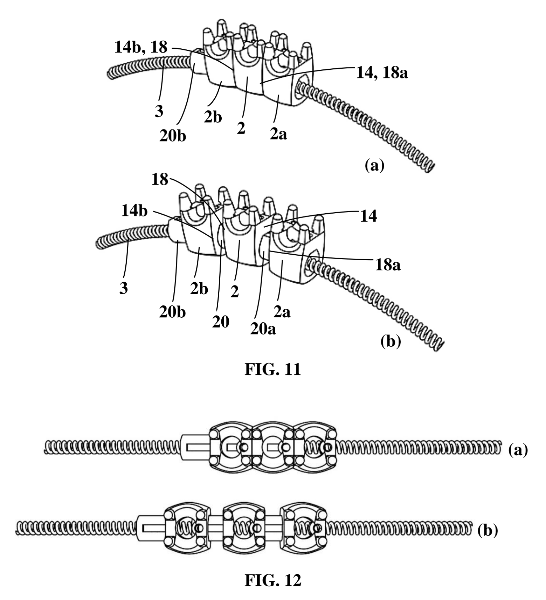

As shown in **FIG. 11,** in normal condition, the elastic wire **3** remains in an unloaded condition and the distal end wall **18** and the proximal end wall **14** of the socket **2** remains in contact with the proximal end **wall 14a** and the distal end wall **18b** of the adjacent sockets **2a** and **2b** respectively. In normal condition, the elastic wire **3** forms a circular closed ring shape.

As shown in **FIG. 2, 11 (b), 12(b), 13(b)** and **19(b),** in stretched condition, the elastic wire **3** is in loaded condition and the distal end wall **18** and the proximal end wall **14** of one socket **2** slide apart from the proximal end wall **14a** and the distal end wall **18b** of the adjacent sockets **2a** and **2b** respectively making the projections **20** of the socket **2** and the projection **20b** of the socket **2b** visible. Hence, in stretched condition, the plurality of sockets **2** shifts in the radial direction. In stretched condition, length of the elastic wire **3** increase and forms a circular or elliptical closed ring shape.

As shown in **FIGS. 1** and **2,** size of the stretchable jewelry **1** in normal condition and in completely stretched condition depends on the number of sockets **2** used, length **7** of the socket **2,** and length **35** of the blind slot **25** provided on the socket **2.**

Dimension **D1** defining a size **38** of the stretchable jewelry **1** in the normal condition can be calculated using the Equation 1 wherein, N is number of the sockets **2** used.

$$\pi D1 = N * length\ \mathbf{41} \tag{1}$$

Dimension **D2** defining a size **39** of the stretchable jewelry **1** in the fully stretched condition can be calculated using the Equation **2** wherein, **N** is number of the sockets **2** used. The length **7** and length **35** is shown in **FIG. 5.**

$$\pi D2 = N * (length\ \mathbf{41} + length\ 35) \tag{2}$$

The through hole **22** of the projection **20** is straight whereas the elastic wire **3** passing through these projections **20** is of circular ring shape in normal condition and, of circular or elliptical ring shape in stretched condition. Under the circumstances, there may be a chances of jamming of the elastic wire **3** in the tubular passage **11** formed by the series of through holes **22** of the plurality of projections **20** of the sockets **2** and inner hollow passages formed by the plurality of U-shaped hollow bodies **13** of the sockets **2** during expansion or contraction of the elastic wire **3** while putting on or off the stretchable jewelry **1.** To overcome this problem and to smoothly operate the stretchable jewelry **1,** the diameter **36** of the through hole **22** of the projection **20 (FIG. 8)** and the spring diameter **D** of the elastic wire **3 (FIG. 9(b))** is kept such that even in normal condition of the stretchable jewelry **1** in which the inner diameter of the ring formed by the elastic wire **3** is minimum, it does not jam into the tubular passage **11** formed by assembling the plurality of sockets **2** due to interference or geometry difference.

Passing of the elastic wire **3** from the tubular passage **11** formed by assembling the plurality of sockets **2** allowing controlled sliding movement of the socket **2** with respect to each other in an assembled condition and, fitting of the gemstones 6 in each socket **2** completely covers full length of the elastic wire **3** in normal as well as in fully stretched condition. This result into complete concealing of the various parts of the mechanism including the pins **12,** the elastic wire **3** used for providing expandability to the stretchable jewelry **1,** ends **5** of the elastic wire **3,** screws **4** joining the ends **5** of the elastic wire **3** and the LASER weld joint **8** joining the screws **4** without compromising on aesthetic of the stretchable jewelry **1** and comfort of the wearer. When the stretchable jewelry **1** is worn by the wearer, a bottom external surface **37** of the U-shaped hollow body **13** of the plurality of sockets **2,** remains towards the skin of the wrist of the wearer.

As the bottom external surface **37** of the U-shaped hollow body **13** is smooth, it is comfortable for the wearer to carry the stretchable jewelry **1.** Further, the brand and hall mark can be stamped on the socket **2** for its identification as the socket **2** concealing the ends **5** of the elastic wire **3.**

In other embodiment of the present invention, instead of the gemstone **6** some other stone or crystal or decorative element of metal or nonmetal may be used.

The plurality of sockets **2** and the pin **12** may be made up of metallic material including precious and non-precious metals and its alloys such as but not limited to gold, silver, platinum, palladium, rhodium, stainless steel, titanium, tungsten, brass, copper and aluminum. In other embodiment, the plurality of sockets **2** may be made up of nonmetallic material such as but not limited to ceramic, porcelain, resin, acrylic, glass, natural material such as wood, bone, horn, coral, and nuts. The pin **12** may be fixed to the socket **2** using adhesives or mechanically using interference fit. As the pin **12** is not visible after fitting of the gemstone 6, nonprecious metals can be used for the pin **12** for improving strength and reducing the cost of the stretchable jewelry **1** without compromising on overall aesthetics. On stretching, the plurality sockets **2** slides simultaneously with respect to each other giving symmetric look to the stretchable jewelry **1** even in partially stretched condition adding to the overall aesthetics of the stretchable jewelry 1.

For maintenance and repair, the stretchable jewelry **1** can be easily dismantled by breaking the LASER weld joint **8** using the central opening **27** in the top wall **26** of the socket **2** concealing it and removing the screws **4** and the pins **12.** For the purpose, the gemstone **6** is removed for getting an excess through the central opening **27**. The socket **2** concealing the ends **5** of the elastic wire **3** along with the screws **4** and LASER weld is marked for its identification to aid disassembling the stretchable jewelry **1** for maintenance purpose.

The described invention is implemented with the help of the stretchable jewelry **1** constructed using the dimensions as other data as per details given in following **Table 1** to ascertain that stated objectives are achieved. **FIG. 19** shows stretchable jewelry along with dimensions as per example 1 according to the present invention in (a) normal condition and (b) in stretched condition.

**Table 1**

| Feature description | Value |
| --- | --- |
| Number of the sockets **2** | 72 |
| Number of pins **12** | 72 |
| Material of the sockets **2** | Gold |
| Material of the elastic wire **3** | Nitinol |
| Material of the screws **4** | Stainless steel |
| Material of pins **12** | Gold |
| Method used for assembling the pins **12** | Brazing |
| Elastic wire 3 diameter **d** | 0.2 mm |
| Spring outer diameter **D** | 0.8 mm |
| Stiffness of spring formed by elastic wire **3** | 0.0151 N/mm |
| Diameter $D_o$ of the head of the screws **4** | $\leq$ D |
| Length 7 of the socket **2** | 2.5 mm |
| Length **45** of the projection **20** on the socket **2** | 1.7 mm |
| Width of the **51** blind slot **25** on the projection **20** | 0.4 mm |

(continued)

| Feature description | Value |
| --- | --- |
| Outer diameter **52** of the projection **20** | 1.5 mm |
| Diameter **47** of the receptor hole **16** provided on the proximal end wall **14** of the socket **2** | 1.6 mm |
| Diameter **53** of the pin **12** | 0.3 mm |
| Width **48** of the socket **2** | 3.1 mm |
| Diameter **40** of the gemstone **6** that can be fitted in the sockets **2** | 1.5-3.0 mm |
| Size **38** of the stretchable jewelry **1** in normal condition | 57 mm |
| Size **39** of the stretchable jewelry **1** in fully stretched condition | 72 mm |

**Claims**

1. A stretchable jewelry **1** comprising:

a plurality of sockets **2** configured for holding a gemstone **6** and assembled with each other allowing controlled sliding movement of one socket **2** relative to other forming a tubular passage **11** in an assembled condition;
an elastic wire **3** passing through the tubular passage **11** for supporting the plurality of sockets **2**;
screws **4** rigidly attached to each end **5** of the elastic wire **3** for forming a closed ring shape by LASER welding the screws **4**; and
pins **12** inserted into each socket **2** for assembling the sockets **2** with each other restricting their relative sliding movement and preventing their disassembly on breakage of the elastic wire **3**;
**characterized in that**
each said socket **2** comprises:

• a U-shaped hollow body **13** with proximal and distal end walls **14, 18** positioned parallel to each other, closing the U-shaped hollow body **13** from its proximal and distal ends **15,19,**
• a projection **20** extending laterally outward from the distal end wall **19** along an axis **17,** having: a through hole **22** for passing the elastic wire **3,** a horizontal flat plane **23** preventing relative rotation of the assembled sockets **2** with respect to each other and, a blind slot **25** on the horizontal flat plane **23** starting from the distal end wall **19** and extending partially along the projection **20,**
• a receptor hole **16** on the proximal end wall **14** with a shape corresponding to the projection **20,**
• a top wall **26** partially closing the U-shaped hollow body **13** from top and designed to hold and secure the gemstone **6** using a central opening **27** and the claws **28** concealing the internal hollow structure, including the pin **12,** and the elastic wire 3,
• a through vertical hole **29** on the proximal end wall **14** extending from the top wall **26** to the receptor hole **16** for inserting the pin **12,** the top wall **26** is configured such that fixing of the gemstone **6** using the plurality of claws **28** to the socket **2** completely hide the internal hollow construction of the socket **2** including the through vertical hole **29,**

the pin **12** and the elastic wire **3,**

one end **31** of the pin **12** inserted into the through hole **29** of the socket **2** is projected out of a surface **32** of the receptor hole **16** and remains within the blind slot **25** of the projection **20** of the adjacent socket **2** without touching surfaces of the blind slot **25** and other end **33** of the pin **12** remaining in a horizontal plane of the top wall **26** is brazed to the top wall **26,**
the socket **2** is assembled with the adjacent socket **2** by inserting the projection **20** into the receptor hole **16** of the adjacent socket **2** and inserting the pin **12** into the through vertical hole **29** of the adjacent socket **2** to engage with the blind slot **25** of the socket **2,**
a length **45** of the projection **20** extending from the distal end **19** of the U-shaped hollow body **13** is configured such that it doesn't touches the distal end wall **18** of the adjacent socket **2** in any state in assembled condition,
a wire diameter **d,** a helical spring outer diameter **D** and a pitch **P** of the elastic wire **3** formed as a circular cylindrical helical spring are maintained to achieve a stiffness of the elastic wire **3** that balances comfort and functionality,

the screws **4** have heads with diameters **D_o** smaller than the through hole **22** of the projection **20,** and fixing of the gemstone **6** in the plurality of sockets **2** in an assembled condition completely conceals the elastic wire **3**, the ends **5** of the elastic wire **3**, the screws **4** along with LASER weld joint **8** and the pins **12** from all the sides in normal as well as in fully stretched condition.

2. The stretchable jewelry **1** as claimed in claim 1, wherein the elastic wire **3** is made up of Nitinol or Titanium material and the screws **4** are made up of a metallic material preferably stainless steel suitable for LASER welding.

3. The stretchable jewelry **1** as claimed in claim 1, wherein summation of a length **7** of the plurality of sockets **2** defines a size **38** of the stretchable jewelry **1** in normal condition.

4. The stretchable jewelry **1** as claimed in claim 1, wherein summation of the length **7** of the plurality of sockets **2** and a length **35** of the blind slot **25** of the plurality of sockets **2** defines a size **39** of the stretchable jewelry **1** in fully stretched condition.

5. The stretchable jewelry **1** as claimed in claim 1, wherein a diameter **36** of the through hole **22** of the projection **20** and an outer diameter **D** of the elastic wire **3** formed as the circular cylindrical helical spring is configured to prevent interference or jamming of the elastic wire **3** in the tubular passage **11** even in normal condition of the stretchable jewelry **1** when the inner diameter of the ring shape formed by the elastic wire **3** is minimum.

6. The stretchable jewelry **1** as claimed in claim 1, wherein the plurality of sockets **2** and the pins **12** are made from metallic material including precious and non-precious metals and its alloys such as but not limited to gold, silver, platinum, palladium, rhodium, stainless steel, titanium, tungsten, brass, copper and aluminum.

7. The stretchable jewelry **1** as claimed in claim 1, wherein the plurality of sockets **2** and the pins **12** are made from non-metallic material such as but not limited to ceramic, porcelain, resin, acrylic, glass, natural material such as wood, bone, horn, coral, and nuts.

8. The stretchable jewelry **1** as claimed in claim 1, wherein the pin **12** is fixed to the socket **2** using adhesives or mechanically using interference fit.

9. The stretchable jewelry **1** as claimed in claim 1, wherein nonprecious metals are used for the pin **12** for improving strength and reducing the cost of the stretchable jewelry **1** without compromising its overall aesthetics as the pins **12** are not visible after fitting of the gemstone **6.**

10. The stretchable jewelry **1** as claimed in claim 1, wherein on stretching, each socket **2** slides symmetrically with respect to adjacent sockets **2** maintaining uniform aesthetics of the stretchable jewelry **1** even in partially stretched condition.

11. The stretchable jewelry **1** as claimed in claim 1, wherein the stretchable jewelry **1** is dismantled by removing the gemstones **6,** breaking the weld joint of the screws **4** and removing the pins **12** of the sockets **2** for maintenance and repair.

12. A method for manufacturing the stretchable jewelry **1** comprising steps of:

assembling total N-1 number of sockets **2** forming a tubular passage **11** as per required dimension of the stretchable jewelry **1** in normal state using pins **12** where **N** represents total number of sockets **2** required to be assembled to construct the stretchable jewelry **1** of required size in normal and in fully stretched states;
assembling an elastic wire **3** of calculated length as per size of the stretchable jewelry **1** in normal state by passing it through a tubular passage **11** formed by assembling the **N-1** number of the sockets **2** keeping equal length of the elastic wire **3** projecting out of the sockets **2** located at two ends of a series of socket **2** so formed;
assembling a screw **4** with each end **5** of the elastic wire **3** to firmly hold the screws **4** with the ends **5** of the elastic wire **3**;
accommodating the screws **4** attached to the ends **5** of the elastic wire **3** within an internal hollow space **9** of the U-shaped hollow body **13** of the socket **2** used for joining of the sockets **2** located at two ends of a series formed by assembling total **N-1** number of sockets **2**;
LASER welding the two heads of the screw **4** butting with each other and located within the hollow space **9** of the U-shaped hollow body **13** of the socket **2** to form a circular ring shape wherein the heads of the screws **4** are LASER welded from a central opening **27** in the top wall **26** closing a U-shaped hollow body **13**; and

marking the socket **2** accommodating ends **5** of the elastic wire **3** along with the screws **4** and LASER weld joint **8** for its identification to aid disassembling of the stretchable jewelry **1** for maintenance purpose.

FIG. 1

FIG. 2

FIG. 3

FIG. 4

FIG. 5

FIG. 6

**FIG. 7**

**FIG. 8**

**(a)**

**(b)**

**FIG. 9**

**FIG. 10**

**FIG. 11**

**FIG. 12**

FIG. 13

FIG. 14

FIG. 15

FIG. 16

FIG. 17

FIG. 18

**(a)**

**(b)**

**FIG. 19**

Europäisches
Patentamt

European
Patent Office

Office européen
des brevets

## EUROPEAN SEARCH REPORT

**Application Number**

EP 26 15 2284

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2023/371660 A1 (BORSARI GIAMPIERO [IT]) 23 November 2023 (2023-11-23) * abstract; figures 1-5 * * paragraph [0018] - paragraph [0064] * ----- | 1-12 | INV. A44C5/02 A44C5/08 A44C11/00 |
| A | IT 2023 0001 2180 A1 (MANORO PRECIOUS TRADING S R L [IT]) 14 December 2024 (2024-12-14) * the whole document * ----- | 1-12 | |
| A | US 2021/059364 A1 (OSTASZ MAREK [US] ET AL) 4 March 2021 (2021-03-04) * abstract; figures 1-12 * * paragraph [0033] - paragraph [0039] * ----- | 1-12 | |
| A | FR 470 601 A (GEORGES THIBAULT [FR]) 19 September 1914 (1914-09-19) * the whole document * ----- | 1-12 | |

**TECHNICAL FIELDS SEARCHED (IPC)**

A44C

The present search report has been drawn up for all claims

| Place of search | Date of completion of the search | Examiner |
|---|---|---|
| The Hague | 27 May 2026 | Thielgen, Robert |

EPO FORM 1503 03.82 (P04C01)

## ANNEX TO THE EUROPEAN SEARCH REPORT
## ON EUROPEAN PATENT APPLICATION NO.

EP 26 15 2284

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | | Publication date | Patent family member(s) | | Publication date |
|---|---|---|---|---|---|
| US 2023371660 A1 | | 23-11-2023 | EP | 4221536 A1 | 09-08-2023 |
| | | | US | 2023371660 A1 | 23-11-2023 |
| | | | WO | 2022070012 A1 | 07-04-2022 |
| IT 202300012180 A1 | | 14-12-2024 | --------------------------------- | | |
| US 2021059364 A1 | | 04-03-2021 | US | 2021059364 A1 | 04-03-2021 |
| | | | US | 2021298433 A1 | 30-09-2021 |
| FR 470601 A | | 19-09-1914 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4074210 B1
- IT 102017000015156 A
- IT 102018000004703 A
- US 20160345690 A1
- US 20220079303 A1
- US 20230189945 A1
- US 10271619 B1
- WO 2018172933 A1
- WO 2019073275 A1
- WO 2024194809 A1
- EP 2712513 B1
- US 20230371660 A1
- US 11116292 B2